# EUROPÄISCHE PATENTANMELDUNG

(11) **EP 2 207 334 A1**
(43) Veröffentlichungstag der Anmeldung: **14.07.2010**
(21) Anmeldenummer: 09013996.5
(22) Anmeldetag: 09.11.2009
(51) Int. Cl.: H04M 3/493, H04M 3/42, H04Q 11/04, H04M 1/2745

(54) **Verfahren zur Synchronisation von Adressbüchern**

(30) Priorität: 09.01.2009 DE 102009004510
(71) Anmelder: Deutsche Telekom AG, 53113 Bonn (DE)
(72) Erfinder: Schatzmayr, Rainer, 53229 Bonn (DE)
(74) Vertreter: COHAUSZ DAWIDOWICZ HANNIG & SOZIEN

(57) **Zusammenfassung**

Die Erfindung betrifft ein Verfahren zur Synchronisierung eines lokalen Adressbuchs (3), das in einem Endgerät (1) für die Telekommunikation über einen digitalen Festnetzanschluss, insbesondere einem ISDN-Telefon, gehalten wird, mit einem zentralen Adressbuch (2), das von einem Server (27) verwaltet wird. Die Synchronisation erfolgt mittels eines Synchronisationsprotokolls über einen Steuerkanal des Festnetzanschlusses, über den eine Datenverbindung zwischen Endgerät (1) und Server (27) hergestellt wird, wobei das Synchronisationsprotokoll von einer Verknüpfungseinrichtung (7, 8) auf ein über den Steuerkanal übertragenes Steuerungsprotokoll abgebildet wird.

## Beschreibung

Die vorliegende Erfindung betrifft ein Verfahren zur Synchronisierung eines lokalen Adressbuchs, das in einem Endgerät für die Telekommunikation über einen digitalen Festnetzanschluss, insbesondere einem ISDN-Telefon, gehalten wird, mit einem zentralen Adressbuch, das auf einem Server eine Netzwerkbetreibers gehalten wird.

Telekommunikationsteilnehmer besitzen unterschiedliche Endgeräte für die Telekommunikation, in denen jeweils Adressbücher gehalten werden. Für gewöhnlich hat ein Teilnehmer zumindest ein Mobiltelefon und ein Festnetztelefon, das in den privaten Räumen an das öffentliche, kabelgebundene Festnetz angeschlossen ist. Jeder Kontakt, der in das Adressbuch neu aufgenommen, gelöscht oder geändert werden soll, muss folglich sowohl in dem Adressbuch des Mobiltelefons als auch des Festnetztelefons manuell eingepflegt respektive geändert oder gelöscht werden. Dies ist äußerst benutzerunfreundlich.

Derzeitige Adressbücher in Mobiltelefonen sind in der Lage, die unterschiedlichsten Arten von Kennungen zusätzlich zu Namen, Rufnummern oder geographischen Adressen zu speichern und zu verwalten. Moderne Mobilfunkgeräte können zusätzliche Daten zu einem Kontakt wie E-Mail Adressen, Benutzernamen für Sofortnachrichtendienste (Instant Messaging Services) oder auch Namen speichern, die die Kontaktperson in einer besonderen Gemeinschaft, einer so genannten Community oder online Community, besitzt. Das Adressbuch in einem Mobiltelefon entwickelt sich daher zu dem wichtigsten Hinterlegungsort für persönliche aber auch geschäftliche Kontakte.

Derzeitige Festnetztelefone sind entweder direkt über ein Kabel mit einem Telekommunikationsnetzwerk eines Netzwerkbetreibers verbunden oder für die letzten Meter innerhalb der privaten Räumlichkeiten des Telekommunikationsteilnehmers kabellos, d.h. per Funkverbindung, insbesondere nach dem DECT-Standard (Digital Enhanced Cordless Telecommunications; digitale, verbesserte schnurlose Telekommunikation), mit einer Telefonbasis verbunden, die ihrerseits über Kabel mit dem Telekommunikationsnetzwerk des Netzwerkbetreibers verbunden ist. Diese Festnetztelefone besitzen ihre eigenen Adressbücher, die lediglich direkt in dem Gerät konfiguriert und verwaltet werden können. Lediglich einige wenige High-End-Geräte ermöglichen die Verwaltung ihres Adressbuchs mittels eines PCs. Ein Abgleich ist bei machen Handgeräten untereinander möglich, sofern sie beide an dieselbe kabellose Telefonbasis angekoppelt sind.

Es sind zentrale Adressbücher bekannt, nachfolgend auch als Netzadressbücher bezeichnet, die auf einer zentralen Speichereinrichtung eines Servers gehalten werden und die dazu benutzt werden können, sämtliche Kontakte der lokalen Adressbücher verschiedener Geräte untereinander zu synchronisieren, indem eine Änderung eines Eintrags in einem lokalen Adressbuch stets eine entsprechende Aktualisierung, d.h. einen Abgleich mit dem zentralen Adressbuch bewirkt. Durch eine Synchronisation mit dem zentralen Adressbuch kann der geänderte Adressbuchinhalt wiederum mit den weiteren Geräten abgeglichen werden, so dass letztendlich alle Geräte mit Adressbüchern stets auf dem aktuellen Stand sind.

Ein Mechanismus zum Abgleichen eines in einem digitalen Festnetztelefon gehaltenen Adressbuchs mit einem zentralen Adressbuch ist nicht bekannt. Es besteht daher die Notwendigkeit, die in einem Mobiltelefon hinterlegten Kontakte stets manuell auf ein Festnetztelefon zu übertragen.

Der vorliegenden Erfindung liegt daher die Aufgabe zugrunde, ein Verfahren bereitzustellen, dass eine automatische Synchronisierung eines Adressbuchs eines Festnetztelefons mit einem zentralen Adressbuch auf einfache Weise ermöglicht.

Diese Aufgabe wird durch ein Verfahren mit den Merkmalen des Anspruchs 1 gelöst. Vorteilhafte Weiterbildungen der Erfindung sind in den Unteransprüchen enthalten und werden nachfolgend erläutert.

Erfindungsgemäß wird ein Verfahren zur Synchronisierung eines lokalen Adressbuchs, das in einem Endgerät für die Telekommunikation über einen digitalen Festnetzanschluss, insbesondere einem ISDN-Telefon, gehalten wird, mit einem zentralen Adressbuch, das auf einem Server eine Netzwerkbetreibers gehalten wird, vorgeschlagen, bei dem die Synchronisation mittels eines Synchronisationsprotokolls über einen Steuerkanal des Festnetzanschlusses erfolgt, über den eine Datenverbindung zwischen Endgerät und Server hergestellt wird, wobei das Synchronisationsprotokoll auf ein über den Steuerkanal übertragenes Steuerungsprotokoll von einer Verknüpfungseinrichtung abgebildet wird.

Die Übertragung von Synchronisationsdaten mittels eines Synchronisationsprotokolls über den Steuerkanal des digitalen Anschlusses des Endgeräts ermöglicht es, einen Abgleich des in diesem Endgerät gehaltenen Adressbuchs mit einem zentralen Adressbuch über die digitale Teilnehmeranschlussleitung vorzunehmen, an die das Endgerät angeschlossen ist.

Die der Erfindung zu Grunde liegende Idee ist es, ein zentrales Adressbuch bereitzustellen, das in einer zentralen Speichereinrichtung gehalten und beispielsweise von einem Netzwerkbetreiber verwaltet wird, und das dazu verwendet werden kann, sämtliche Adressbücher verschiedener Kommunikationsendgeräte untereinander zu synchronisieren. Sofern ein Benutzer einen neuen Kontakt in seinem mobiltelefonseitigen Adressbuch erstellt, kann er durch einen automatischen Synchronisationsvorgang zwischen seinem Mobiltelefon und dem Netzadressbuch einerseits sowie zwischen dem Netzadressbuch und seinem Festnetztelefon andererseits, denselben Kontakt in dem lokalen Adressbuch seines festnetzgebundenen Endgeräts sehen. Ein manuelles Einpflegen dieses neuen Kontakts in das Festnetztelefon erübrigt sich dadurch. Sofern der Kontakt in dem Festnetztelefon erstellt wird, kann er durch eine Synchronisation mit dem Netzadressbuch und anschließender Synchronisation mit dem lokalen Adressbuch in dem Mobiltelefon auf dieses übertragen werden, so dass auch hier ein manuelles Einpflegen des Kontakts nicht mehr nötig ist. Dies bietet dem Anwender einen enormen Mehrwert seines Festnetzanschlusses und hohen Bedienkomfort.

Die Synchronisation des lokalen mit dem zentralen Adressbuch kann dadurch erreicht werden, dass ein für die Datensynchronisation geeignetes Protokoll mit einem Protokoll für die Datenübertragung verknüpft wird. Eine Verknüpfungseinrichtung kann sowohl auf dem das zentrale Adressbuch verwaltenden Server als auch auf dem Endgerät für die Festnetztelefonie implementiert sein.

Vorzugsweise ist das Festnetztelefon ein ISDN-Telefon, der Festnetzanschluss in entsprechender Weise ein ISDN-Anschluss und der Steuerkanal der so genannte D-Kanal des ISDN-Anschlusses ist, wobei zur Übertragung von Steuerdaten über den D-Kanal zweckmäßigerweise das so genannte LAP-D Protokoll verwendet werden kann. "ISDN" steht für "Integrated Services Digital Network" und kann sinngemäß mit "diensteintegrierendes digitales Netz" übersetzt werden. Neben der Telefonie werden über ISDN auch Dienste wie Fernschreiben (Telex), Teletex, Datex-L (leitungsvermittelte Datenübertragung) und Datex-P (paketvermittelte Datenübertragung) übertragen. ISDN bietet eine digitale Übertragung bis zum Endgerät. Dadurch ist es möglich, über einen Anschluss mehrere Kanäle gleichzeitig zu übertragen. Beim ISDN-Basisanschluss stehen zwei Nutzkanäle, so genannte B-Kanäle, für die Telekommunikation zur Verfügung. Sie können unabhängig voneinander für Telefongespräche, Fax- oder Datenübertragungen per Modem genutzt werden. An einen Anschluss können mehrere Endgeräte angeschlossen werden und es können mehrere Rufnummern (MSN, Multiple Subscriber Number) vergeben werden, die dann beliebig den Endgräten zugeordnet werden können.

ISDN stellt des Weiteren einen separaten Steuerkanal für vermittlungstechnische Leistungsmerkmale zur Verfügung, der auch Datenkanal oder D-Kanal genannt wird. Über den D-Kanal werden Steuerinformationen und die Signalisierung zum Aufbau und Abbau der Verbindungen übertragen. Bei einem ISDN-Basisanschluss besitzen die Nutzkanäle eine Datenübertragungsrate von 64 kBits/s wohingegen der Steuerkanal eine Datenübertragungsrate von 16 kBits/s besitzt. Die Übertragung von Steuer- und Signalisierungsdaten erfolgt über den D-Kanal mittels des so genannten LAP-D Protokolls. Dieses LAP-D Protokoll (Link Access Procedure for the D-Channel) ist ein Protokoll der Sicherungsschicht im ISDN, d.h. der zweiten Protokollschicht im Sinne des OSI-Schichtenmodells (OSI, Open Systems Interconnection). Die Sicherungsschicht ist für den Austausch von Datenpaketen über die erste Schicht zuständig, der so genannten Bitübertragungsschicht, die der physischen Verbindungsleitung entspricht. Die Sicherungsschicht teilt die zu versendenden Daten in Pakete auf, erkennt und beseitigt Übertragungsfehler und steuert die Übertragungsreihenfolge der Pakete. Diese Aufgaben werden im Steuerkanal des ISDN gemäß dem LAP-D Protokoll vorgenommen.

Erfindungsgemäß ist nunmehr vorgesehen, den Steuerkanal für die Synchronisation der Adressbücher nutzbar zu machen. Dies kann dadurch erfolgen, dass ein Synchronisationsprotokoll auf das LAP-D Protokoll aufgesetzt wird, wobei dieses Aufsetzen mittels der Verknüpfungseinrichtung erfolgen kann, die die Synchronisationsprotokolldaten mit den Steuerprotokolldaten für den Versand über den Steuerkanal verbindet sowie nach Erhalt von verknüpften Daten, die Synchronisationsprotokolldaten von den Steuerungsprotokolldaten trennt.

Als Synchronisationsprotokoll kann vorzugsweise SyncML (Synchronization Markup Language) verwendet werden. SyncML ist ein plattformunabhängiger Standard, der zur Synchronisation von Daten zwischen Computern verwendet wird und von der Open Mobile Alliance (OMA) für die Gerätesynchronisation (DS, device snychronisation) zwischen Endgerät und Server entwickelt wurde. Derzeit unterstützt SyncML den Austausch von Datenobjekten (OBEX, Object Exchange) via Infrarot oder Bluetooth®, sowie WAP (Wireless Application Protocol) und HTTP (Hypertext Transfer Protocol). Bei den Daten kann es sich um beliebige Informationen handeln. SyncML verbindet die Eigenschaften einer Beschreibungssprache mit Protokollvereinbarungen und besitzt eine auf XML (Extensible Markup Language) beruhende Syntax.

Ein Vorteil von SyncML liegt darin, dass erkannt wird, welches Endgerät welche Daten hat, und auch kontrolliert wird, ob das jeweilige andere Endgerät diese Daten zusätzlich zu seinen eigenen besitzen will. Für den Fall, dass beide Endgeräte dieselben Dateninhalte haben, nur in unterschiedlichen Versionen, d.h. wenn z. B. ein einzelner Eintrag eines Kontakt geändert wurde, kann definiert werden, welche Änderung beibehalten wird.

Vorzugsweise erfolgt der Synchronisationsvorgang automatisch, nachdem ein Eintrag im lokalen oder zentralen Adressbuch erstellt, geändert oder gelöscht wurde. Der Benutzer muss damit den Synchronisationsvorgang nicht explizit starten, so dass gewährleistet ist, dass die Adressdaten im lokalen und zentralen Adressbuch stets abgeglichen sind.

In dem Endgerät und in dem Server kann jeweils eine Verknüpfungseinrichtung vorgesehen sein, die die Synchronisationsprotokolldaten zu deren Versendung mit den Steuerungsprotokolldaten verknüpft, um diese über den Steuerungskanal zu übertragen. Die Verknüpfungseinrichtungen sind zudem dazu eingerichtet, mit Steuerungsprotokolldaten verknüpfte Synchronisationsprotokolldaten zu trennen, wenn sie vom Server oder vom Endgerät empfangen werden.

Vorteilhaft ist es, wenn die Synchronisationsprotokolldaten komprimiert übertragen werden. Hierdurch kann die benötigte Bandbreite reduziert und eine schnellere Datensynchronisation erreicht werden.

Dem zentralen Adressbuch kann eine Kennung zugeordnet sein, die zur Adressierung desselben von der Verknüpfungseinrichtung des Endgeräts auf eine Rufnummer des Servers abgebildet wird. Hierdurch wird ermöglicht, das zentrale Adressbuch von dem Endgerät aus zu adressieren. Die Abbildung der Rufnummer kann dabei beispielsweise die Form <LocURI>http://Rufnummer/Kennung/</LocURI> aufweisen.

Weiterhin kann dem lokalen Adressbuch eine Kennung zugeordnet sein, wobei die Verknüpfungseinrichtung des Servers zur Adressierung des lokalen Adressbuches die Kennung des lokalen Adressbuches auf die Rufnummer des Endgerätes abbilden kann. Die derart abgebildete Kennung kann beispielsweise die Form <LocURI>ISDN:Rufnummer</LocURI> aufweisen.

Weiterhin ist es vorteilhaft, dass die Verknüpfungseinrichtungen eine Empfangsbestätigung an den entsprechenden Absender übermitteln, wenn ein Datenpaket erhalten wurde. Auf diese Weise können Übertragungsfehler erkannt werden. Wird ein Datenpaket nicht erhalten, so dass keine Empfangsbestätigung erfolgt, können die versendeten Daten erneut versendet werden.

Die Erfindung wird nachfolgend anhand eines Ausführungsbeispiels und der beigefügten Figuren näher erläutert. Es zeigen:
- Fig. 1:: schematische Darstellung der Verbindung lokaler Adressbücher mit einem zentralen Netzadressbuch.
- Fig. 2:: Protokollstapel zur Synchronisation eines lokalen Adressbuchs eines ISDN-Telefons mit einem zentralen Netzadressbuch

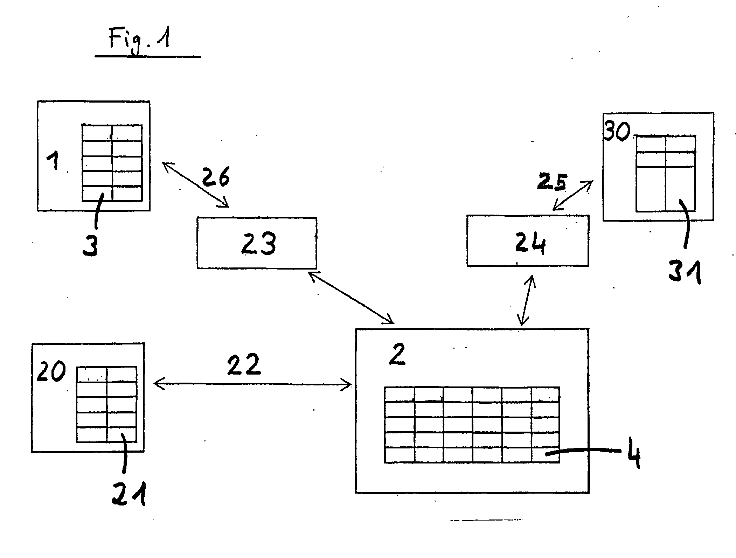

Fig. 1 zeigt den verbindungsorientierten Zusammenhang zwischen lokalen Adressbüchern 3, 21, 31 und einem zentralen Adressbuch 2, nachfolgend Netzadressbuch genannt. Das Netzadressbuch 2 enthält Adressdaten 4, die in einer zentralen Datenbank hinterlegt sind. Über ein GSM (Global System for Mobile Communications), GPRS (General Packet Radio Service) oder ein UMTS (Universal Mobile Telecommunications System) Netzwerk 25 eines Mobilfunknetzwerkbetreibers 24 ist das lokale Adressbuch 31 eines Mobiltelefons 30 mit den Adressdaten 4 des Netzadressbuchs 2 synchronisierbar. Weiterhin ist das lokale Adressbuch 3 eines Festnetztelefons 1 über ein analoges oder ISDN Netz 26 eines Festnetzbetreibers 23 sowie das lokale Adressbuch 21 eines PCs 20 über das Internet 22 mit den Adressdaten 4 des Netzadressbuchs 2 synchronisierbar.

Das Netzadressbuch 2 kann von dem Mobiltelefon 30 aus betrieben werden. Der Benutzer kann einen Adressbucheintrag des lokalen Adressbuchs 31 des Mobiltelefons 30 erstellen, ändern oder löschen. Die Änderung werden dann entweder durch explizite manuelle Initiierung, vorzugsweise jedoch automatisiert nach der Änderung des Adressbuchinhalts zum Netzadressbuch 2 übertragen. Das mobiltelefonseitige Adressbuch 31 kann auch vom Benutzer dazu gebracht werden, sich mit dem Netzadressbuch 2 zu synchronisieren. Alternativ kann es eine Synchronisierungsanfrage vom Netzadressbuch 2 erhalten, so dass ein Synchronisationsvorgang gestartet wird. Die Übertragung der Synchronisationsdaten erfolgt dabei mittels SyncML (OMA DS) über das GSM, GPRS oder ein UMTS Netzwerk 25, das von dem Mobilfunknetzwerkbetreiber 24 betrieben wird.

Das Netzadressbuch 2 kann Synchronisationsanfragen von einem Mobiltelefon 30, einem PC 20 oder von einem Festnetztelefon 1 erhalten und in dem zentralen Speicher hinterlegen. Weiterhin ist das Netzadressbuch 2 in der Lage, Synchronisationsanfragen an das Mobiltelefon 30, den PC 20 oder das Festnetztelefon 1 zu senden, wenn es eine Änderung in der Kontaktliste, d.h. seines Adressbuchinhalts 4 erkennt.

Erfindungsgemäß kann das Netzadressbuch 2 auch von dem Festnetztelefon 1, insbesondere einem ISDN-Telefon 1 aus betrieben werden. Der Benutzer kann einen Adressbucheintrag des lokalen Adressbuchs 3 des Festnetztelefons 1 erstellen, ändern oder löschen. Die Änderung wird dann entweder durch explizite manuelle Initiierung, vorzugsweise jedoch automatisiert nach der Änderung des Adressbuchinhalts zum Netzadressbuch 2 übertragen. Das festnetztelefonseitige Adressbuch 3 kann auch vom Benutzer dazu gebracht werden, sich mit dem Netzadressbuch 2 zu synchronisieren. Alternativ kann es eine Synchronisierungsanfrage vom Netzadressbuch 2 erhalten, so dass ein Synchronisationsvorgang gestartet wird.

Der dargestellte Zusammenhang ist in Figur 1 veranschaulicht.

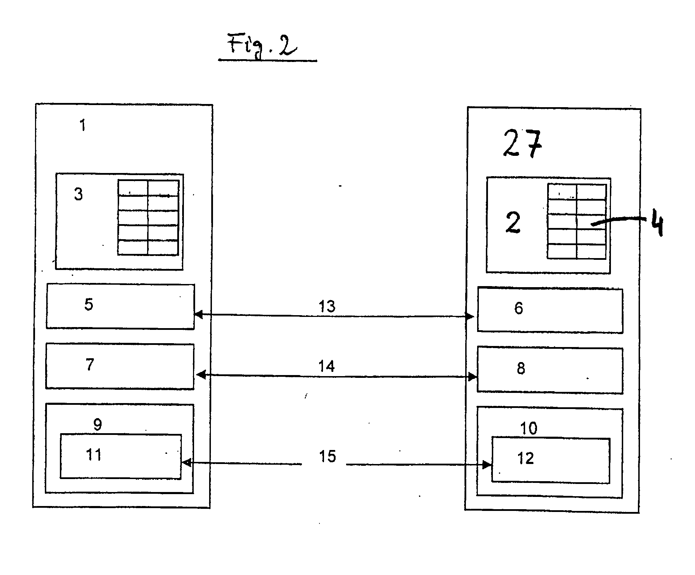

Fig. 2 zeigt eine schematische Darstellung der Protokollstapel, die gemäß dem Vorschlag der Erfindung in dem Festnetztelefon 1 und dem Server 27, auf dem das Netzadressbuch 2 betrieben wird, implementiert sind, um eine Synchronisation des lokalen Adressbuchs 3 mit dem Netzadressbuch 2 durchzuführen.

Für die Synchronisation wird erfindungsgemäß eine Verknüpfungseinrichtung 7, 8 sowohl auf Seiten des Festnetztelefons 1 als auch auf Seiten des Servers 27 implementiert, die jeweils einen Verknüpfungsmechanismus ausführen, der die Benutzung des SyncML Protokolls über das LAP-D Protokoll einer ISDN-Verbindung ermöglicht.

Der Verknüpfungsmechanismus ist in Figur 2 veranschaulicht und basiert auf einem Satz von Protokollstapeln, die in dem Festnetztelefon 1 und dem Server 27 implementiert sind. LAP-D (11, 12) bezieht sich hierbei auf das von dem Standard ITU-T Q.921 definierte Protokoll und wird dafür benutzt, einen Übertragungskanal über den D-Kanal aufzubauen. Die Verknüpfungseinrichtungen 7, 8 führen den erfindungsgemäßen Verknüpfungsmechanismus aus. SyncML bezieht sich entweder auf den SyncML Client, d.h. das Festnetztelefon 1, oder den SyncML Server 27 und betrifft das Protokoll, wie es von der Open Mobile Association (OMA) spezifiziert ist. Mit den Bezugsziffern 3 und 4 sind die Adressbuchdaten gekennzeichnet, in denen Namen und Rufnummern enthalten sind, die entweder in dem Festnetztelefon 1 oder in einer Datenbank gespeichert sind, die mit dem Server 27 in Verbindung steht.

Die Funktionalität des Verknüpfungsmechanismusses, die durch den SyncML-Protokollstapel bereitgestellt wird, kann durch die folgenden Merkmale beschrieben werden:
- Aufbau einer logischen Verbindung 13 zwischen dem SyncML Protokollstapel 5 im Festnetztelefon 1 und dem SyncML Protokollstapel 6 auf dem Server 27.
- Die Verknüpfungseinrichtungen 7, 8 erstellen eine Verbindung 14 für jeden Synchronisationsvorgang.
- Die Zieladresse des von der Verknüpfungseinrichtung 7 oder 8 zu erstellenden Verbindung 14 wird von demjenigen SyncML-Protokollstapel 5, 6 spezifiziert, der die Verbindung 14 initiiert.
- Die Verbindung 14, die von einer der Verknüpfungseinrichtungen 7, 8 aufgebaut wird, kann von dem SyncML-Protokollstapel 5, 6 des Telefons 1 oder des Servers 27 beendet werden.
- Wenn die Verbindung 14 zwischen den Verknüpfungseinrichtungen 5, 6 von einem SyncML-Protokollstapel 5, 6 beendet wird, wird der jeweils an dem anderen Ende der Verbindung 14 liegende SyncML-Protokollstapel 5, 6 informiert.
- Die Verbindung zwischen den Verknüpfungseinrichtungen 7, 8 wird beendet, wenn die Verbindung 15 zwischen den LAP-D Protokollstapeln 11, 12 beendet wird. In diesem Fall informieren beide Verknüpfungseinrichtungen 7, 8 die jeweiligen SyncML-Protokollstapel 5, 6, dass die Verbindung 13 beendet worden ist.
- Der SyncML-Protokollstapel kann Daten zum anderen SyncML-Protokollstapel übertragen, sobald eine Verbindung 14 zwischen den Verknüpfungseinrichtungen 7, 8 etabliert ist. Die Daten werden dann von der entsprechenden Verknüpfungseinrichtung 7, 8, übertragen.
- Die von einer Verknüpfungseinrichtung 7, 8 übertragenen Daten können komprimiert übertragen werden, so dass der Bandbreitenverbrauch reduziert wird.
- Die Datenübertragung über die Verbindung 14 zwischen den Verknüpfungseinrichtungen 7, 8 kann zuverlässig erfolgen, so dass Bitübertragungsfehler erkannt werden können.
- Der SyncML Protokollstapel 5, 6 wird im Falle eines Datenverlusts während der Synchronisation durch die entsprechende Verknüpfungseinrichtung 7, 8 informiert.

Der Verknüpfungsmechanismus macht von den folgenden Funktionalitäten des LAP-D Protokollschicht Gebrauch:
- Herstellung einer LAP-D Verbindung 15 zwischen der Verknüpfungseinrichtung 7 des Telefons 1 und der Verknüpfungseinrichtung 8 des Servers 27.
- Die LAP-D Adresse des Netzadressbuchs 2 wird im Telefon 1 konfiguriert.
- Herstellung einer LAP-D Verbindung 15 zwischen der Verknüpfungseinrichtung 8 des Servers 27 und der Verknüpfungseinrichtung 7 des Telefons 1.
- Die LAP-D Adresse des Telefons 1, dessen Zielverknüpfungseinrichtung 7 adressiert wird, ist die dem Telefon 1 zugeordnete ISDN-Rufnummer.
- Die LAP-D Verbindung 15, die für die Verknüpfungseinrichtung 8 hergestellt worden ist, kann vom Telefon 1 beendet werden, wobei die Verknüpfungseinrichtung 8 des Netzadressbuchs 2 darüber informiert wird.
- Die LAP-D Verbindung 15, die für die Verknüpfungseinrichtung 7 hergestellt worden ist, kann vom Netzadressbuch 2 beendet werden, wobei die Verknüpfungseinrichtung 7 des Telefons 1 darüber informiert wird.
- Eine LAP-D Verbindung 15 wird für jeden Synchronisationsvorgang hergestellt.
- Der Verknüpfungsmechanismus macht sich die Datenübertragungsfähigkeit des LAP-D zunutze, um Synchronisationsdaten von der Verknüpfungseinrichtung 7 des Telefons 1 zur Verknüpfungseinrichtung 8 des Servers 27 und von der Verknüpfungseinrichtung 8 des Servers 27 zur Verknüpfungseinrichtung 7 des Telefons 1 zu übertragen.
- Die Verknüpfungseinrichtungen 7, 8 erhalten von der LAP-D Schicht die Information, dass die Verbindung 15 abnormal beendet worden ist.
- Die Verknüpfungseinrichtungen 7, 8 erhalten von der LAP-D Schicht die Information, dass Daten aufgrund von Bitübertragungsfehlern während der Synchronisation verloren gegangen sind.

Der Verknüpfungsmechanismus macht von den folgenden Funktionen Gebrauch, um die von dem SyncML-Protokollstapel 5, 6 bereitgestellte Funktionalität auf die von der LAP-D Verbindung 11, 12 bereitgestellte Funktionalität abzubilden. Diese Funktionen sind als Teile der Verknüpfungseinrichtungen 7, 8 in diesem implementiert.

Die Verknüpfungseinrichtung 7 bildet die SyncML Kennung (URI, Uniform Resource Identifier) des Netzadressbuchs 2 auf die ISDN-Rufnummer des das Netzadressbuch 2 verwaltenden Servers 27 ab, die von dem LAP-D Protokoll 12 verwendet wird. Die SyncML Kennung (URI) des Netzadressbuchs 2 kann in der Form dieser ISDN Rufnummer gebildet sein, der eine Datenbankkennung folgt, beispielsweise in der Form <LocURI>http://495005005000/joesmith/</LocURI>. In diesem Beispiel ist die von dem LAP-D Protokoll verwendete Rufnummer 495005005000 und die Datenbankkennung der Adressdaten 4 joesmith. Die Verknüpfungseinrichtung 7 setzt diese Rufnummer und die Datenbankkennung zur Adressierung des Netzadressbuchs 2 in den XML-basierten Befehl des SyncML Protokolls <LocURI></LocURI> ein, der die Zieladresse der Synchronisationsdaten angibt.

Des Weiteren bildet die Verknüpfungseinrichtung 8 die SyncML Kennung (URI) des lokalen Adressbuchs 3 des Telefons 1 auf die vom LAP-D Protokoll 11 verwendete ISDN-Rufnummer des Telefons 1 ab. Die SyncML Kennung ist in diesem Fall die Kennung des Telefons 1, die in der Gestalt einer ISDN-Rufnummer sein kann. Die abgebildete Kennung kann beispielsweise folgende Form aufweisen: <LocURI>ISDN:4921144556677</LocURI>.

Die Verknüpfungseinrichtungen 7, 8 gewährleisten, dass die Datenpakete in der richtigen Reihenfolge übertragen werden, indem den Datenpaketen Sequenznummern vergeben werden, die einen Datenverlust während der Übertragung 14 erkennen lassen.

Die Verknüpfungseinrichtungen 7, 8 übertragen Daten lediglich nach dem Aufbau einer Verbindung 15 zwischen dem Telefon 1 und dem Netzadressbuch 2 respektive dem Server 27.

Die Verknüpfungseinrichtungen 7, 8 verwenden interne Empfangsbestätigungen, um sich gegenseitig darüber zu informieren, dass übertragene Datenpakete auf der anderen Seite der Verbindung 14 erhalten wurden.

## Patentansprüche

1. Verfahren zur Synchronisierung eines lokalen Adressbuchs (3), das in einem Endgerät (1) für die Telekommunikation über einen digitalen Festnetzanschluss, insbesondere einem ISDN-Telefon, gehalten wird, mit einem zentralen Adressbuch (2), das von einem Server (27) verwaltet wird, **dadurch gekennzeichnet, dass** die Synchronisation mittels eines Synchronisationsprotokolls über einen Steuerkanal des Festnetzanschlusses erfolgt, über den eine Datenverbindung zwischen Endgerät (1) und Server (27) hergestellt wird, wobei das Synchronisationsprotokoll von einer Verknüpfungseinrichtung (7, 8) auf ein über den Steuerkanal übertragenes Steuerungsprotokoll abgebildet wird.

2. Verfahren nach Anspruch 1, **dadurch gekennzeichnet, dass** der Festnetzanschluss ein ISDN-Anschluss ist und der Steuerkanal der D-Kanal des ISDN-Anschlusses ist, wobei zur Übertragung von Steuerdaten über den D-Kanal das LAP-D Protokoll verwendet wird.

3. Verfahren nach Anspruch 1 oder 2, **dadurch gekennzeichnet, dass** als Synchronisationsprotokoll SyncML verwendet wird.

4. Verfahren nach Anspruch 1, 2 oder 3, **dadurch gekennzeichnet, dass** der Synchronisationsvorgang automatisch erfolgt, nachdem ein Eintrag im lokalen oder zentralen Adressbuch (2, 3) erstellt, geändert oder gelöscht wurde.

5. Verfahren nach einem der vorherigen Ansprüche, **dadurch gekennzeichnet, dass** in dem Endgerät (1) und in dem Server (27) jeweils eine Verknüpfungseinrichtung (7, 8) vorgesehen ist, die die Synchronisationsprotokolldaten zu deren Versendung mit den Steuerungsprotokolldaten verknüpft, um diese über den Steuerungskanal zu übertragen.

6. Verfahren nach Anspruch 5, **dadurch gekennzeichnet, dass** die Verknüpfungseinrichtung (7, 8) mit Steuerungsprotokolldaten verknüpfte Synchronisationsprotokolldaten trennt, wenn sie vom Server (27) oder vom Endgerät (1) empfangen werden.

7. Verfahren nach einem der vorherigen Ansprüche, **dadurch gekennzeichnet, dass** die Synchronisationsprotokolldaten komprimiert übertragen werden.

8. Verfahren nach einem der vorherigen Ansprüche, **dadurch gekennzeichnet, dass** dem zentralen Adressbuch (2) eine Kennung zugeordnet ist, die zur Adressierung des zentralen Adressbuchs (2) von der Verknüpfungseinrichtung (7) des Endgeräts (1) auf eine Rufnummer des Servers (27) abgebildet wird.

9. Verfahren nach Anspruch 8, **dadurch gekennzeichnet, dass** die Abbildung der Rufnummer die Form <LocURI>http://Rufnummer/Kennung/</LocURI> aufweist.

10. Verfahren nach einem der vorherigen Ansprüche, **dadurch gekennzeichnet, dass** dem lokalen Adressbuch (3) eine Kennung zugeordnet ist und die Verknüpfungseinrichtung (8) des Servers (2) zur Adressierung des lokalen Adressbuches (3) die Kennung des lokalen Adressbuches (3) auf die Rufnummer des Endgerätes (1) abbildet.

11. Verfahren nach Anspruch 10, **dadurch gekennzeichnet, dass** die Abbildung der Kennung die Form <LocURI>ISDN:Rufnummer</LocURI> aufweist.

12. Verfahren nach einem der vorherigen Ansprüche, **dadurch gekennzeichnet, dass** die Verknüpfungseinrichtungen (7, 8) eine Empfangsbestätigung übermitteln, wenn ein Datenpaket erhalten wurde.
